(19) Europäisches Patentamt

European Patent Office

Office européen des brevets

(11) EP 4 621 648 A1

(12) **EUROPEAN PATENT APPLICATION**

(43) Date of publication:
24.09.2025 Bulletin 2025/39

(21) Application number: 25162167.8

(22) Date of filing: 06.03.2025

(51) International Patent Classification (IPC):
G06N 3/045 $^{(2023.01)}$     G06F 40/284 $^{(2020.01)}$

(52) Cooperative Patent Classification (CPC):
G06N 3/045; G06F 40/284; G06F 40/30

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2024 US 202418614063

(71) Applicant: Microsoft Technology Licensing, LLC
Redmond, WA 98052-6399 (US)

(72) Inventors:
• IMANIGOOGHARI, Ayyoob
  Redmond, 98052-6399 (US)
• FAYYAZ, Mohsen
  Redmond, 98052-6399 (US)
• SOMMERLADE, Eric Chris Wolfgang
  Redmond, 98052-6399 (US)

(74) Representative: Page White Farrer
Bedford House
21a John Street
London WC1N 2BF (GB)

(54) **PRODUCING TOKENS IN PARALLEL IN A FIRST LANGUAGE MODEL BASED ON GUIDANCE PRODUCED BY A SECOND LANGUAGE MODEL**

(57) A technique accelerates the generative production of tokens using a target language model that operates in cooperation with a smaller draft language model. In operation, the target language model (1) verifies the accuracy of a first set of draft tokens produced by the draft language model, (2) predicts a new token to follow the last-verified draft token, and (3) generates plural instances of guidance information. The draft language model produces a second set of draft tokens in parallel based on the target output token(s) produced by the target language model and the instances of guidance information. The technique expedites the generation of tokens because the draft language model, due to its size, is able to produce tokens faster than the target language model. The draft language model produces its draft tokens in parallel (at the same time), rather than autoregressively, which further speeds up token generation.

FIG. 1

EP 4 621 648 A1

**Description**

**BACKGROUND**

Generative models, such as language models, often use a large number of parameters. In some cases, for instance, a large language model includes several billion parameters. The latency of a language model grows with its size. As a consequence, a large language model may fail to provide a response in a sufficiently timely matter to satisfy the demands of some applications. The technical literature has proposed various strategies for reducing the latency of language models. But there remains room for improvement in this field of technology.

**SUMMARY**

A technique is described herein for accelerating the generative production of tokens using a target language model that operates in cooperation with a draft language model. In operation, the target language model (1) verifies the accuracy of a first sequence of draft tokens produced by the draft language model, (2) predicts a new target output token to follow the last-verified draft token (if any), and (3) produces plural instances of guidance information in parallel. The draft language model uses the instances of guidance information to generate, in parallel, respective draft tokens of a second sequence of draft tokens.

The technique expedites the generation of tokens for at least two reasons. First, the draft language model is smaller than the target language model, which enables the draft language model to produce tokens in less amount of time compared to the target language model. The target language model itself operates with low latency because it verifies the accuracy of draft tokens produced by the draft language model in a single forward pass. Second, the draft language model produces its draft tokens at the same time (in parallel), rather than auto-regressively (one draft token after the other). The technique also reduces the number of operations that are performed to generate tokens. Each operation consumes memory and processing resources; as such, reducing the number of operations has the net effect of reducing the resources that are used to generate tokens.

According to another illustrative aspect, the target language model uses plural guidance-generating components (also referred to as heads) to produce the plural instances of guidance information in parallel.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

**BRIEF DESCRIPTION OF DRAWINGS**

Fig. 1 shows the operation of a token-generating system that involves the cooperative interaction of a target language model and a draft language model.
Fig. 2 shows an example of the operations shown in Fig. 1.
Fig. 3 shows one implementation of the token-generating system of Fig. 1.
Fig. 4 illustrates an example of a process used by the draft language model to generate plural candidate sequences of draft tokens, and then select one of these sequences.
Fig. 5 shows an attention-generating operation that the draft language uses in choosing among the plural candidate sequences.
Fig. 6 shows a single system that implements the token-generating system of Fig. 3.
Fig. 7 shows a network-based implementation of the token-generating system of Fig. 3.
Fig. 8 is a graph that shows the acceptance ratio of tokens produced by an auto-regressive technique in contrast to a parallel-generation technique.
Fig. 9 shows a training system for training the token-generating system of Fig. 3.
Fig. 10 shows an illustrative language model that can be used to implement the target language model and/or the draft language model of the token-generating system of Fig. 3.
Fig. 11 is a flowchart that provides an overview of one manner of operation of the target language model of Fig. 3.
Fig. 12 is a flowchart that provides an overview of one manner of operation of the draft language model of Fig. 3.
Fig. 13 is a flowchart that provides an overview of the operation of the entire token-generating system of Fig. 3.
Fig. 14 shows an illustrative type of computing system that, in some implementations, is used to implement any aspect of the features shown in the foregoing drawings.

The same numbers are used throughout the disclosure and figures to reference like components and features.

**DETAILED DESCRIPTION**

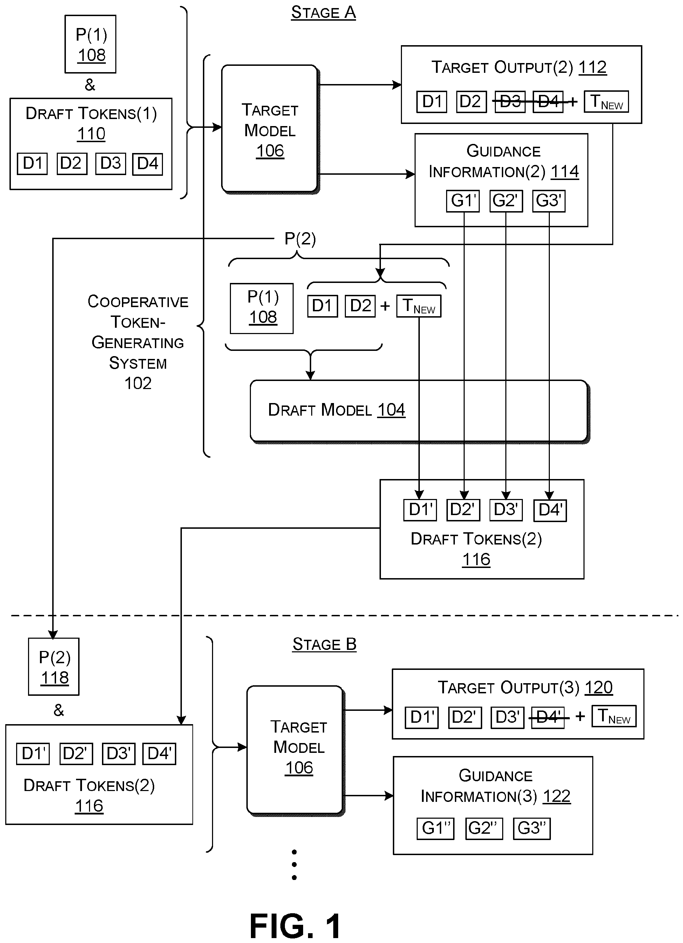

Fig. 1 shows a method for using a token-generating system 102 to generatively produce tokens. The token-generating system 102 includes a draft language model 104 and a target language model 106, which cooperatively exchange information with each other in the course of producing tokens. In the figures, "draft language model" is abbreviated as "draft model" and "target language model" is abbreviated as "target model."

The draft language model 104 has fewer parameters than the target language model 106. In some implementations, for instance, the draft language model 104 has millions of parameters (e.g., 125 million parameters), while the target language model 106 includes over one billion parameters, although the principles described herein apply to models having any sizes (such that the draft language model 104 is smaller than the target language model 106). By using fewer parameters, the draft language model 104 generates tokens in less amount of time compared to the target language model 106. This is because the number of computations that a language model performs grows with its size, and the latency of a language model generally increases with the number of computations it performs. However, the draft language model 104 is generally less accurate compared to the target language model 106.

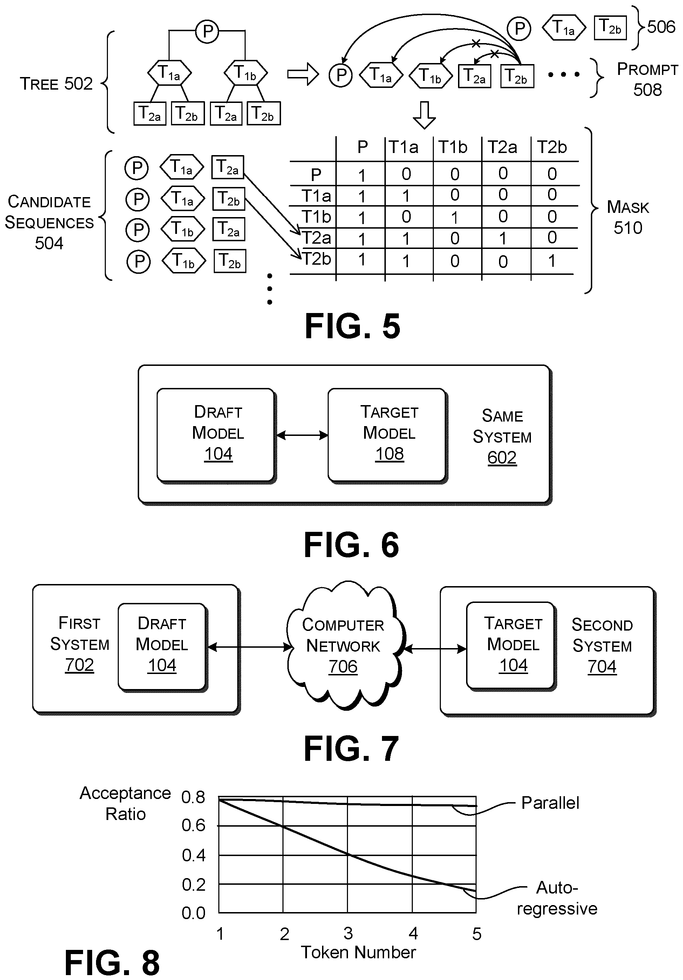

The following terminology is relevant to some examples presented below. A "machine-trained model" or "model" refers to computer-implemented logic for executing a task using machine-trained weights that are produced in a training operation. A "parameter" refers to any type of machine-trained value, such as a weight or a bias value. A "token" refers to a unit of information processed by a machine-trained model, such as a word or a part of a word. In some cases, a tokenizer produces the tokens, but an item (e.g., a text passage) is said to be composed of tokens in a general sense (in which "token" is a synonym of "part"), irrespective of when and where those tokens are actually produced. A "draft token" is a candidate token generated by the draft language model 104. A "prompt" refers to a sequence of tokens submitted to a machine-trained model. An "embedding" is a distributed vector that represents an information item in a vector space. In some contexts, terms such as "component," "module," "engine," and "tool" refer to parts of computer-based technology that perform respective functions. Figs. 6, 7, and 14, described below, provide examples of illustrative computing equipment for performing these functions. The symbol "&" used in the drawings to refer to concatenation of tokens.

A "draft" language model is any language model that generates draft or candidate tokens, while a "target" language model is any model that reviews the draft tokens. The specific qualifiers "draft" and "target" are otherwise nonce terms used to distinguish two models and could be replaced by "first" and "second," respectively.

A "language model" refers to one type of generative machine-trained model that functions as a pattern completion engine. The pattern completion engine includes parameters that reflect statistical patterns which have been learned by performing training on a typically large collection of training examples. In an auto-regressive mode of operation (which is not used by the token-generating system 102), given a sequence of input tokens, the pattern completion engine predicts a next token that is most likely to follow the input tokens. The pattern completion engine then adds the predicted token to the end of the input tokens, to produce an updated sequence of input tokens, and then repeats its analysis for the updated sequence of tokens. This process continues until the pattern completion engine predicts a stop token, which is a signal that the auto-regression operation should terminate.

In a first stage (A) of operation, the target language model 106 receives a first prompt P(1) 108 and a first sequence of draft tokens 110 (if any) produced by the draft language model 104 in a prior stage (if any). The prompt P(1) includes a sequence of all tokens that have been accepted so far. In this example, the first sequence of draft tokens 110 includes draft tokens (D1, D2, D3, and D4), but other implementations include less than four draft tokens or more than four draft tokens. More generally, in the following description, the suffix (n) will be used to describe an instance of information in a sequence of other instances of the same type of information. For instance, the suffix (1) in the first prompt P(1) 108 is used to distinguish this version of the prompt over a next version of the prompt (i.e., P(2)).

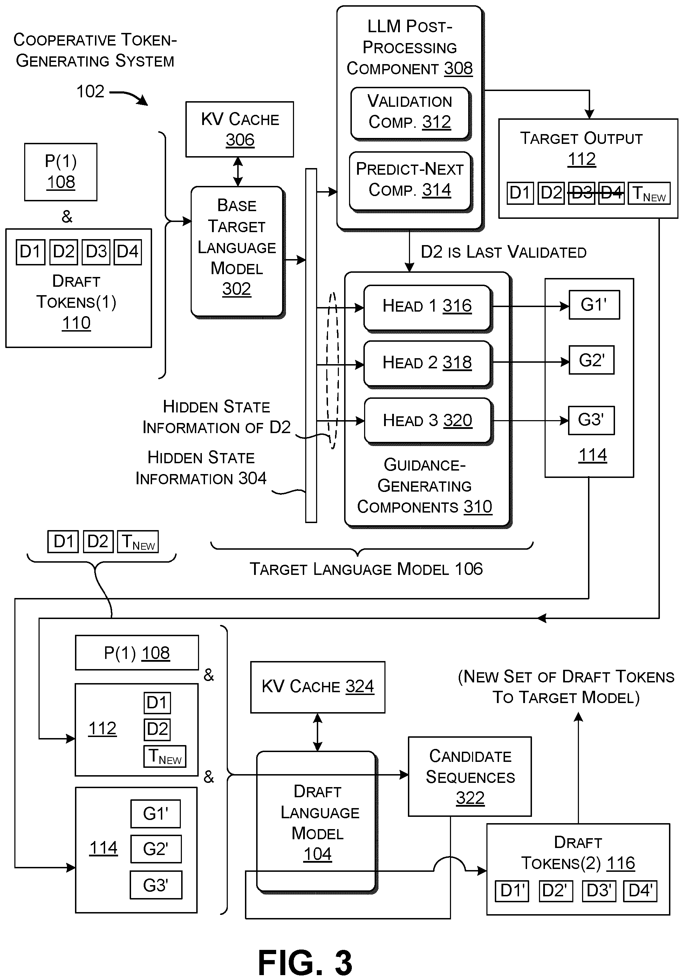

The target language model 106 performs three tasks. First, the target language model 106 verifies the accuracy of each draft token in the first sequence of draft tokens 110. Upon encountering a draft token that fails the verification test, the target language model 106 rejects that draft token and all draft tokens that follow the draft token in the first sequence of draft tokens 110. In the illustrative example of Fig. 1, the target language model 106 concludes that draft token D3 is not accurate. Therefore, the target language model 106 rejects the draft token D3, and also D4 which follows it. As a second function, the target language model 106 predicts a new draft token to follow the last-accepted draft token. In the example of Fig. 3, the target language model 106 predicts a new token ($T_{new}$) to replace the rejected token D3.

As a result of these first two operations, the target language model 106 produces a set of one or more target output tokens 112 (abbreviated in Fig. 1 as "target output(2)"). On one extreme, the target language model 106 rejects all four draft tokens, in which case the set of target output tokens 112 will only include a single token ($T_{new}$). On the other extreme, the target language model 106 will accept all four of the draft tokens, in which case the set of target output tokens 112 will include five tokens (D1, D2, D3, D4, and T$_{new}$).

In a third function performed after the above two functions, the target language model 106 produces plural instances of guidance information 114 (abbreviated in Fig. 1 as "guidance information"). In some implementations, the target language model 106 uses plural guidance-generating components or "heads" (not shown) operating in parallel to produce the plural instances of guidance information 114. Each instance of guidance information includes one or more distributed guidance vectors. In the example of Fig. 3, the target language model 106 produces three instances of guidance information (G1', G2', G3') using three respective instances of guidance-generating components (not shown), but other implementations produce fewer or more instances of guidance information.

In a next part of stage A, the draft language model 104 receives a sequence of input tokens that includes the first prompt P(1) 108, the set of target output token(s) 112, and the instances of guidance information 114. The draft language model 104 operates on this sequence of input tokens in parallel to produce, also in parallel, a second set of draft tokens 116 (D1', D2', D3', and D4'). In particular, the draft language model 104 uses T$_{new}$ to predict D1', uses G1' to produce D2', uses G2' to produce D3', and uses G3' to produce D4'. Further note that the draft language model 104 operates on the entire set of input tokens in parallel to produce the draft tokens 116 in parallel.

In a first part of a second stage (B), the target language model 106 receives a second prompt P(2) 118 and the second sequence of draft tokens 116. The prompt P(2) 118, in turn, is a shorthand reference to the previous first P(1) 108 and the set of target output token(s) 112. Assume that the target language model 106 maps this sequence of input tokens to a set of one or more new target output tokens 120 and plural new instances of guidance information 122. In a next part of the second stage (B) (not shown), the draft language model 104 operates on the second prompt P(2) 118, the set of target output token(s) 120, and the new instances of guidance information 122 to generate a third sequence of draft tokens (not shown).

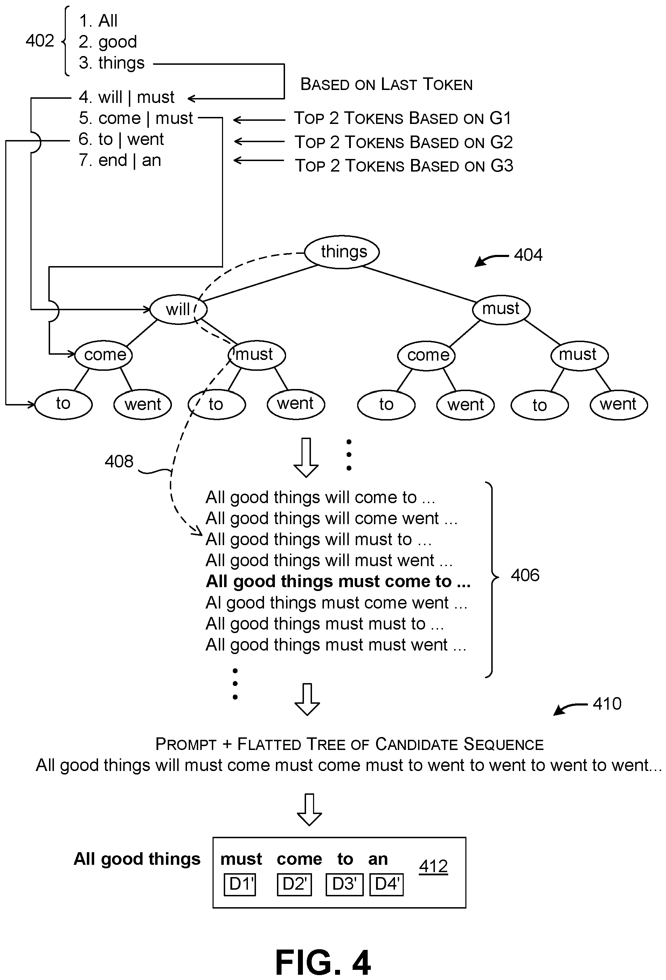

Overall, the token-generating system 102 performs one or more additional stages of the above-described operations until a stop token is produced. In this back-and-forth process, the target language model 106 and the draft language model 104 mutually support each other. That is, the draft language model 104 relies on the target language model 106 to verify the accuracy of a proposed sequence of draft tokens, while the target language model 106 relies on the draft language model 104 to reduce deficiencies in the instances of guidance information produced by the target language model 106 (which the draft language model does through its sequence-based processing described below with reference to Figs. 4 and 5).

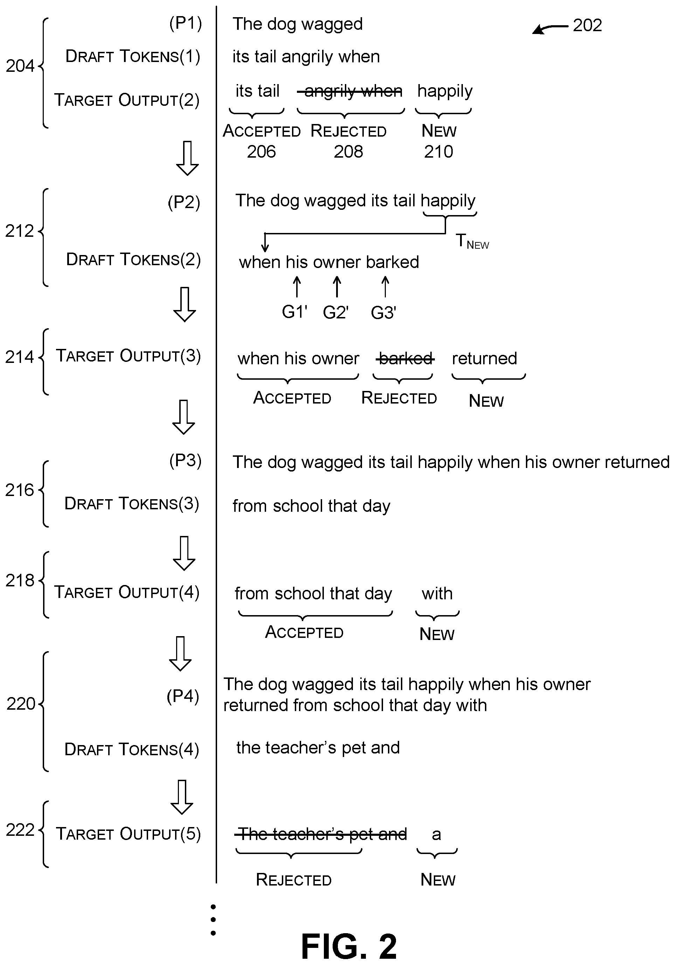

Fig. 2 shows a more concrete example 202 of the manner of operation shown in Fig. 1. In an operation 204, the target language model 106 receives a sequence of input tokens that include a prompt P(1) ("the dog wagged") and a sequence of draft tokens ("the tail angrily when"). In response, the target language model 106 produces the target output tokens "its tail happily." In particular, the target language model 106 accepts the first two draft tokens 206 ("its tail"), rejects the next two draft tokens 208 ("angrily when"), and predicts a new token T$_{new}$ 210 ("happily") to replace the third draft token ("angrily"). More specifically, the target language model 106 rejects the draft token "angrily," which causes it to reject all draft tokens that follow "angrily." Although not shown, the target language model 106 produces plural instances of guidance information (G1', G2', G3').

In an operation 212, the draft language model 104 maps the updated complete sequence of input tokens ("The dog wagged its tail happily") to a new sequence of draft tokens ("when his owner barked"). More specifically, the draft language model 104 maps, in parallel: (1) the new token T$_{new}$ "happily" to a next draft token "when"; (2) the instance of guidance information G1' to the next draft token "his"; (3) the instance of guidance information G2' to the next draft token "owner"; and (4) the instance of guidance information G3' to the next draft token "barked."

In a third operation 214, the target language model 106 accepts the sequence of draft tokens ("when his owner"), rejects the draft token "barked," and predicts a replacement token ("returned") for the rejected fourth draft token ("barked").

In a fourth operation 216, the draft language model 104 maps the updated complete sequence of input tokens ("The dog wagged its tail happily when his owner returned") to a new sequence of draft tokens ("from school that day").

In a fifth operation 218, the target language model 106 accepts all of the draft tokens ("from school that day") and also predicts a new token ("with") to follow last accepted draft token ("day").

In a sixth operation 220, the draft language model 104 maps the updated complete sequence of input tokens ("The dog wagged its tail happily when his owner returned from school with") to a new sequence of draft tokens ("the teacher's pet and").

In a seventh operation 222, the target language model 106 rejects the complete set of draft tokens ("the teacher's pet and") and predicts a new token ("a"). The fifth operation 218 and the seventh operation 222 are therefore examples of two extremes in the range of possible outcomes of the operation of the target language model 106. That is, in the fifth operation 218, all of the draft tokens are accepted, leading to the production of five target output tokens. In the seventh operation 222, none of the draft tokens are accepted, leading to the production of one target output token. The token-generating system 102 repeats the above back-and-forth interaction between the target language model 106 and the draft language model 104 until a stop token is generated (and confirmed, if necessary).

The token-generating system 102 expedites the generation of tokens for at least two reasons. First, the draft language model 104 is smaller than the target language model 106, which enables the draft language model 104 to produce draft tokens in less amount of time compared to the target language model 106. The target language model 106 itself operates with low latency because it verifies the accuracy draft tokens produced by the draft language model 104 in a single forward pass. Second, the draft language model 104 produces its draft tokens at the same time (in parallel), rather than auto-regressively (one draft token after the other). These latency improvements allow downstream applications to deliver output results in a reduced amount of time, reducing the perception that the token-generating processing is "hanging up."

To be more concrete, consider an example in which the target language model 106 has a size of 6.7 billion parameters and the draft language model 104 has a size of 125M parameters. As a baseline measure, consider the case in which the target language model 106 is used, by itself, to auto-regeneratively generate output tokens. The token-generating system 102 of Fig. 1 achieves a 1.57X to 1.60X speedup over the baseline, depending on whether a greedy-based or sampling-based approach is used to select the set of target output tokens (to be described below). Without the use of guidance information, the performance drops to a 1.35X speedup over the baseline (using a sampling-based approach).

The token-generating system 102 also reduces the number of operations that are performed to generate tokens. Each operation consumes memory and processing resources; as such, reducing the number of operations has the net effect of reducing the memory and processing resources that are used to generate tokens. The token-generating system 102 also reduces the number of interactions between the target language model 106 and the draft language model 104 in the course of generating tokens, and thereby reduces communication costs. Further, these improvements lower the carbon cost of the target-generating system 102 and expand the types of computing platforms that are capable of feasibly running the token-generating system 102.

The specific form of guidance information also impacts the latency and efficiency of the token-generating system 102. For example, the number of interactions between the draft language model 104 and the target language model 106 increases (and latency consequently increases) when each guidance vector used by the token-generating system 102 is replaced with an embedding associated with the unknown <unk> token. (A tokenizer produces the <unk> token when it cannot find a matching token for an input word in its vocabulary.) Performance similarly drops when each guidance vector used by the token-generating system is replaced with an embedding that represents the average of embeddings associated with all tokens in the tokenizer's vocabulary.

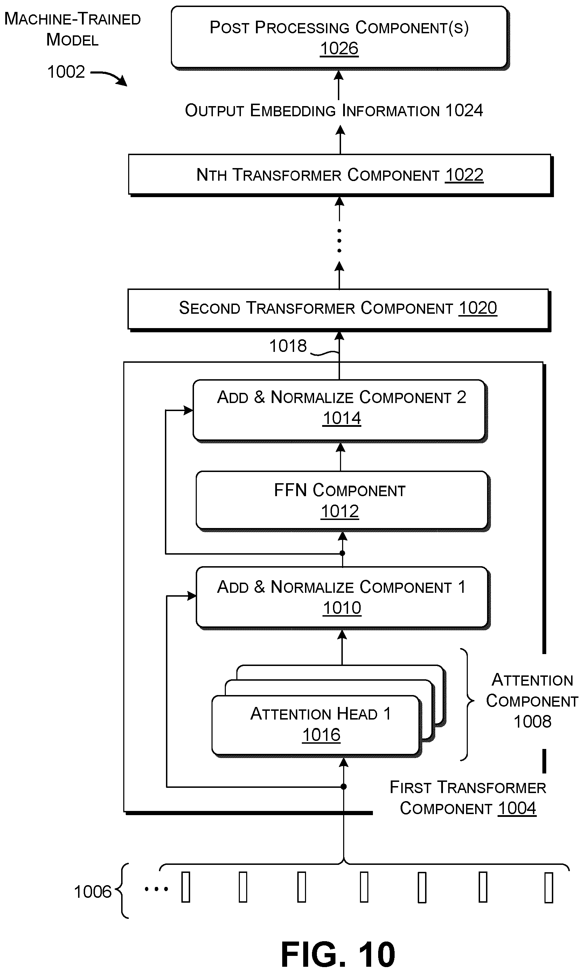

Fig. 3 shows one implementation of the token-generating system 102, framed in the context of the first stage (A) shown in Fig. 1. The target language model 106 includes a base language model 302 that produces hidden state information 304. For instance, the base language model 302 includes a series of transformer blocks. The base language model 302 consults a KV cache 306 in performing its operations. The KV cache 306 stores KV vector information produced, in a prior pass, in the course of performing attention operations. Additional information regarding the base model's transformer blocks and the attention operations performed therein will be provided below with respect to the explanation of Fig. 10.

The target language model 106 uses the hidden state information 304 in two ways. First, an LM (language model) post-processing component 308 relies on the hidden state information 304 to produce the target output token(s) 112. In the example of Fig. 3, the LM post-processing component 308 accepts the first two draft tokens (D1, D2), rejects the next two draft tokens (D3, D4), and predicts a new token ($T_{new}$) to replace the rejected draft token D3. Second, plural guidance-generating components 310 use the hidden state information 304 to produce the plural instances of guidance information 114. In the example of Fig. 3, the guidance-generating components 310 produce three instances of guidance information (G1', G2', G3'), but other implementations can generate fewer or more instances.

Referring first to the LM post-processing component 308, a validation component 312 validates the draft tokens 110. To understand the operation of the validation component 312, first note that the draft language model 104 computes a probability distribution $d(x)$ for each draft token position, based on the tokens that precede that position, that describes levels of confidence associated with different tokens in a vocabulary of tokens. Each level of confidence expresses the likelihood that a particular token should be used in that position. In some implementations, the draft language model 104 uses a greedy approach by selecting the token with the highest confidence based on the distribution. For example, when choosing the draft token for the third position in operation 212 of Fig. 2, the draft language model chooses "owner" because that word has the highest confidence. The target language model 302 independently computes a probability distribution $t(x)$ for each position in the sequence of draft tokens 110, based on the tokens which precede that position. More specifically, the LM post-processing component 308 computes this distribution $t(x)$ by mapping the hidden state information 304 to logits using a machine-trained linear component, and then uses a softmax component (which is a normalized exponential function) to convert the logits to the probability distribution $t(x)$

In some cases, the target language model 106 is able to confirm the choice of a draft token made by the draft language model 104 with equal or higher confidence than the draft language model 104. In this circumstance, the validation component 312 accepts the draft token chosen by the draft language model 302. The validation component 312 handles the alternative case (in which the target language model 106 cannot confirm the choice of the draft language model 104) in different ways. In a greedy approach, the validation component 312 rejects the draft token. In a sample-based approach, the validation component 312 decides to reject or accept the draft token by randomly selecting between the two options in a manner that is biased by some function of a probability d assigned to this token by the draft language model 104 and a probability t assigned to this token by the target language model 106. For example, in some implementations, this function is 1 - $t/d$.

A predict-next component 314 predicts the new token $T_{new}$ that will follow the last-accepted token in the draft tokens 110 (if any). In a first approach, the predict-next component 314 uses a greedy approach to perform this task by choosing the token having the highest confidence, as computed by the target language model 106. In a second approach, the predict-next component 314 predicts the next token by sampling from an adjusted probability, e.g., as given by $t'(x) =$ norm(max(0, $t(x)$ - $d(x)$)). This equation expresses a probability distribution that is equal to the maximum of 0 or the difference between $t(x)$ and $d(x)$. Norm refers to normalization. In one hybrid approach, the predict-next component 314 uses the first-mentioned approach for the special case in which the validation component 312 accepts all of the draft tokens. Otherwise, the predict-next component 314 uses the second approach.

After the validation performed the validation component 312, the guide-generating components 310 produces the instances of guidance information 114 in parallel using plural respective heads (316, 318, 320). In some implementations, each head is a feed-forward fully-connected neural network having any number of layers (e.g., three layers) that uses any activation function(s) (e.g., the ReLU function). That is, each head transforms the hidden state information 304 into a particular instance of guidance information.

More specifically, the hidden state information that is fed to the heads (316, 318, 320) is the hidden state information associated with the last-accepted draft token (if any). In the example of Fig. 3, for instance, the last-accept draft token is D2. If none of the draft tokens are accepted, then the hidden state information that is fed to the heads (316, 318, 320) is associated with the last token of the prompt, which is the last token before D1. Each instance of guidance information is subsequently used by the draft language model 104 to generate a particular draft token in a new sequence of draft tokens. Thus, the different heads (316, 318, 320) produce guidance information that "looks ahead" relative to the last-accepted token (here, D2) by different number to token-position steps.

In some implementations, an instance of guidance information (e.g., a guidance vector) assists the draft language model 104 in generating a draft token, but the instance of guidance information itself is an abstract vector (or vectors) and does not map to a particular token in a vocabulary in a manner that is intelligible upon casual human inspection.

As previously described, the draft language model 104 operates on a sequence of input tokens that include the prompt P(1) 108, the target output token(s) 112, and instances of guidance information 114. In some implementations, in a first pass, the draft language model 104 maps this sequence of input tokens to a set of candidate sequences 322. Each such sequence corresponds to a candidate sequence of draft tokens. In a second pass, the draft language model 104 produces a second-step prompt that expresses the set of candidate sequences. Based on this second-step prompt, the draft language model 104 chooses the candidate sequence having the highest confidence. The draft language model 104 relies on KV information stored in a KV cache 324 in the course of performing the above-described operations. The KV information reflects the outcome of attention operations that are performed in the course of generating the last sequence of output tokens 110.

Fig. 4 shows an example that demonstrates how the draft language model 104 performs its two-step selection of a sequence of draft tokens. Assume that the draft language model 104 operates on a prompt that expresses the incomplete phrase 402 "All good things." In a first pass, for each position in a sequence of draft tokens, the draft language model 104 identifies the two candidate tokens that have the highest probabilities.

More specifically, in the example of Fig. 4, assume that the draft language model 104 determines, on the basis of the logits for the last word "things," that the words "will" and "must" have the two highest probabilities for the first position of the sequence of draft tokens. Assume that the draft language model 104 determines, on the basis of the first instance of guidance information G1, that the words "come" and "must" have the highest probabilities for the second position. Assume that the draft language model 104 determines, on the basis of the second instance of guidance information G2, that the words "to" and "went" have the highest probabilities for the third position. Assume that the draft language model 104 determines, on the basis of the third instance of guidance information G3, that the words "end" and "an" have the highest probabilities for the fourth position. The draft language model 104 makes all of these determinations in parallel because all of the required input information is available to the draft language model 104 at the outset of its processing. Note that other implementations consider more than the top two candidate draft tokens for each position in the sequence of draft tokens. In aggregate, the above operation yields a plurality of candidate tokens.

In some implementations, the draft language model 104 forms, based on the above-described candidate tokens, a hierarchical tree 404 that expresses different possible sequences of draft tokens 406. That is, a top node expresses the last word ("things") in the incomplete phrase 402. A next level expresses the choice between "will" and "must" for the first position. A next level expresses the choice between "come" and "must," and so on. A path from the root node to a root node describes a valid candidate path. For instance, one such path 408 corresponds to the candidate sequence "All good things must come to."

In a second pass, the draft language model 104 produces a second-step prompt 410 that includes a flatted version of the hierarchical tree 404. A flattened version is an expanded (non-nested) expression of the paths through the hierarchical tree 404. The fattened version of the hierarchical tree 404 is preceded by whatever initial prompt is fed to the draft language model 104 at the outset of the two-step processing. Using masked attention operations, the draft language model 104 selects a sequence of draft tokens 412 having the highest probability. If the draft language model 104 produces the correct sequence, the selected output sequence will be, "All good things must come to." But it is also possible that the draft language model 104, because it is less accurate than the target language 106, will produce a sequence of draft tokens that is non-optimal, e.g., by selecting the sequence "All good things must come went." In this case, the target language model 106 will (optimally) subsequently strike the word "went" and replace it with "to."

Fig. 5 shows a simplified example that demonstrates how the draft language model 104 selects a particular sequence of draft tokens. In the first step of the two-step process, the draft language model 104 produces a hierarchical tree 502 that shows the simplified case in which an initial prompt P is followed by either the token T1a or the token T1b. Assume for simplicity that the initial prompt P is a single token. Token T1a is followed by the token T2a or the token T2b. Token T1b is similarly followed by token T2a or token T2b. There are four valid paths through the tree 502, corresponding to candidate sequences 504. One such candidate sequence 506 includes the tokens P, T1a, T2b, and P.

In the second step, the draft language model 104 generates a second-step prompt 508 that expresses the tree 502 in flatted form, preceded by the initial prompt P. The draft language model 104 converts the tokens in the second-step prompt 508 into embeddings, and then performs an attention operation on the embeddings. In this process, the draft language model 104 produces an attention matrix (not shown) having attention scores (not shown). Each attention score describes the relevance between a particular pair of tokens in the second-step prompt 508. Later layers of the draft language model 104 use the attention scores to select the candidate sequence having the highest likelihood.

In performing the attention operation, the draft language model 104 applies a mask 510 that effectively removes certain attention scores from further consideration (e.g., by setting those scores to infinity or some other value that signifies their removal). Each such masked output pair expresses a relationship that is not supported by a candidate path through the tree 502. For instance, with respect to the particular candidate path 506, the token T2b is capable of attending to token T1a, itself, and P, but not token T2a and token T1b. Hence, for the candidate sequence 506, the draft language model 104 will mask out the relationship between token T2b and token T2a, and the relationship between token T2b and token T1b.

In another implementation, the draft language model 104 produces a second-step prompt that includes a batch of the candidate sequences 504, e.g., by including separate entries for all four of the candidate sequences shown in Fig. 5. This option does not require the type of masking described above. However, this approach is not as resource-efficient and latency-efficient compared to the above-described approach (in which the second-step prompt 508 expresses the flattened tree 502).

Fig. 6 shows an example in which a single system 602 is used to implement both the draft language model 104 and the target language model 106. For example, the system 602 is a local system with which a user interacts, such as a user computing device or plural user computing devices operating in cooperation. "Local" means that a system is locally placed with respect to the user who interacts with it. Or the system 602 is a remote system with which plural users interact via a computer network (not shown). "Remote" means that a system is remotely located with respect to a user who interacts with it. In some implementations, the remote system is implemented by one or more servers, and users interact with the servers via local browser applications, application programming interfaces (APIs), or other interface mechanisms.

Fig. 7 shows an example in which a first system 702 implements the draft language model 104 and a second system 704 implements the target language model 106. For example, the first system 702 is a local system (e.g., a user computing device) and the second system 704 is one or more servers with which the local system interacts via a computer network 706.

Each local computing device in either Fig. 6 or Fig. 7 corresponds to any type of computing device, including any of a desktop computing device, a laptop computing device, a handheld computing device of any type (e.g., a smartphone or a tablet-type computing device), a virtual or mixed reality device or system, an intelligent appliance, a wearable computing device (e.g., a smart watch), an Internet-of-Things (IoT) device, a gaming system, a vehicle-borne computing system, any type of robot computing system, etc. In some implementations, the computer network 606 of Fig. 6 is implemented as a local area network, a wide area network (e.g., the Internet), one or more point-to-point links, or any combination thereof.

Fig. 8 shows a chart of the average rate of acceptance of draft tokens per draft-token sequence position for two cases, computed as a result of generating sequences of tokens for 50 prompts. The topmost curve shows the results for a first case in which the draft language model 104 produces the sequences auto-regressively. A bottommost curve shows the results for a second case in which the draft language model 104 produces draft tokens in parallel based on the instances of guidance information. Note that the accuracy of a draft token appreciably drops with advancing token position for the case of parallel computation. This is the reason why it is appropriate to use the target language model 106 to correct any mistakes in the sequence of draft tokens that are chosen in the manner set forth with respect to Fig. 3. This two-phase method of generating tokens is ultimately justified because the parallel generation of draft tokens significantly expedites the production of tokens by the token-generation system 102.

The token-generating system 102 of Fig. 3 can be modified in different ways. In one variation, the token-generating system 102 uses plural target language models instead of the single target language model 106. For example, different target language models handle different topics. Alternatively, or in addition, different target language models have different sizes and associate inference capabilities. The draft language model 104 or another target-side component includes a trainable selector (not shown) that selects a target language model to send the draft tokens.

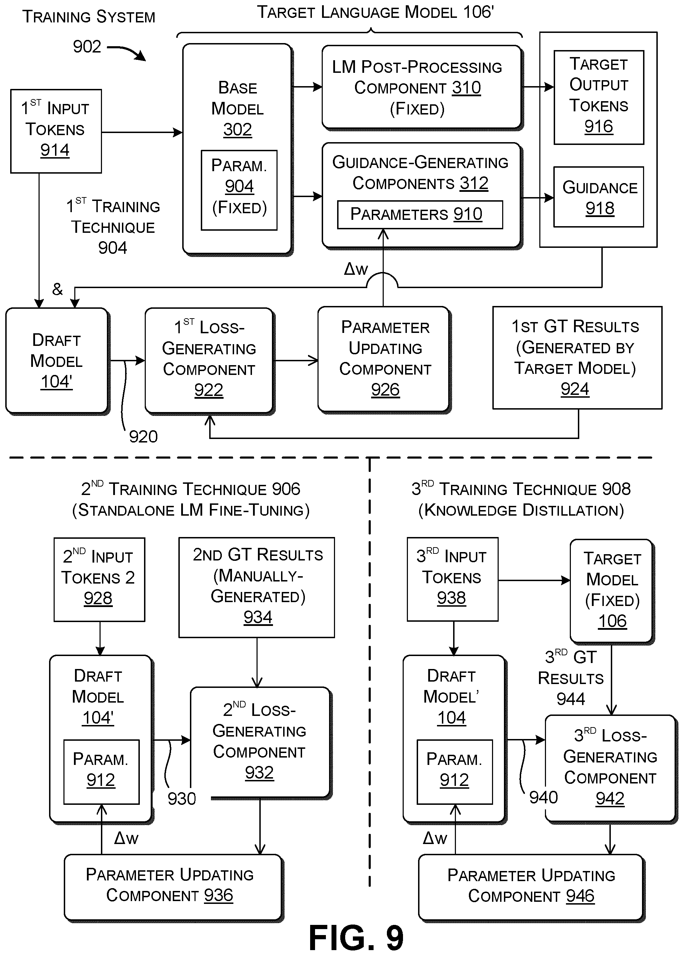

Fig. 9 shows a training system 902 for training the token-generating system 102 of Fig. 2. The draft language model 104' and the target language model 106' are the training-stage counterparts of the draft language model 104 and the target language model 106, respectively. As will be described below, the training system 902 uses different techniques to train the parameters of the token-generating system, including a first technique 904, a second training technique 906, and a third training technique 908. In some implementations, the training system 902 independently applies these techniques (906, 906, 908) to update the parameters of the token-generating system 102. Alternatively, or in addition, the loss generated by at least some of these techniques is combined, and then the combined loss is used to update the parameters of the token-generating system 102. In all cases, the base language model 302 of the target language model 106' includes fixed or frozen parameters that are not updated during training.

The purpose of the first training technique 904 is to fine-tune the parameters 910 of the guidance-generating components 310. The purpose of the second and third training techniques (906, 908) is to fine-tune the parameters 912 of the draft language model 104'. Overall, by virtue of the training performed by the training system 902, the draft language model 104' learns to approximate the knowledge possessed by the target language model 106', e.g., by gaining insight on the embedding space used by the target language model 106'. But the guidance-generating components 310 also learn to assist the draft language model 104' in producing correct draft tokens.

As to the first training technique 904, the target-generating system 102 operates in the same manner shown in Fig. 3. That is, the base model 302 of the target language model 106' transforms a sequence of input tokens 914 into hidden state information (not shown). The LM post-processing component 308 transforms the hidden state information into a set of one or more target output tokens 916. The guidance-generating component 310 transforms the hidden state information into plural instances of guidance information 918. The draft language model 104' transforms the input tokens 914, the target output token(s) 916, and instances of guidance information 918 into a sequence of model-generated draft tokens 920.

A first loss-generating component 922 determines the difference between the model-generated draft tokens 920 and first ground-truth results 924. Loss as a whole (e.g., for an entire batch) is produced using, for instance, cross entropy. In some implementations, the first ground-truth results 924 are produced by using the target language model 106; to auto-regressively transform the input tokens 914 into output tokens, without the assistance of any draft language model. These output tokens are considered good approximations of the correct results because they are produced by a large and accurate language model. A parameter-updating component 926 updates the parameters 910 of the guidance-generating components 310 based on the loss calculated by the first loss-generating component 922, e.g., using stochastic gradient descent in combination with back propagation.

In the second training technique 906, the draft language model 104' auto-regressively transforms second input tokens 928 into model-generated tokens 930, that is, without the assistance of the target language model 106'. A second loss-generating component 932 determines the difference between the model-generated tokens 930 and second ground-truth results 934. Loss as a whole (e.g., for an entire batch) is produced using, for instance, cross entropy. In some implementations, the second ground-truth results 934 are token sequences that are confirmed by human analysts as being correct. A parameter-updating component 936 updates the parameters 912 of the draft language model 104' based on the loss calculated by the second loss-generating component 932, e.g., using stochastic gradient descent in combination with back propagation. In general, the second technique 906 is a form of language model fine-tuning.

In the third training technique 908, the draft language model 104' auto-regressively transforms third input tokens 938 into model-generated tokens 940 without the assistance of the target language model 106'. A third loss-generating component 942 determines the difference between the model-generated tokens 940 and third ground-truth results 944, which correspond to model-generated tokens produced by the target language model 106' based on the third input tokens 938. Loss as a whole (e.g., for an entire batch) is produced using, for instance, cross entropy or Kullback-Leibler (KL) divergence. In some implementations, the target language model 106' (with fixed parameters) auto-regressively produces the third ground-truth results 944 based on the third input tokens 938. A parameter-updating component 946 updates the parameters 912 of the draft language model 104' based on the loss calculated by the third loss-generating component 942, e.g., using stochastic gradient descent in combination with back propagation. In general, the third technique 908 is a form of teacher-student knowledge dissemination, in which the trained target language model 106' disseminates its knowledge to the smaller draft language model 104'.

Fig. 10 shows a transformer-based language model ("language model") 1002 for implementing each of the target language model 106 and the draft language model 104 of Fig. 3. The language model 1002 is composed, in part, of a pipeline of transformer components, including a first transformer component 1004. Fig. 10 provides details regarding one way to implement the first transformer component 1004. Although not specifically illustrated, other transformer components of the language model 1002 have the same architecture and perform the same functions as the first transformer component 1004 (but are governed by separate sets of weights). In the context of the target language model 106, the base language model 302 (of Fig. 3) includes the pipeline of transformer components shown in Fig. 10.

The language model 1002 commences its operation with the receipt of a sequence of input tokens. The input tokens correspond the totality of input tokens received by the target language model 106 or the draft language model 104 at any state of processing. In some examples, a "token" refers to a unit of text having any granularity, such as an individual word, a word fragment produced by byte pair encoding (BPE), a character n-gram, a word fragment identified by the WordPiece or SentencePiece algorithm, etc. To facilitate explanation, assume that each token corresponds to a complete word. The principles set forth herein, however, are not limited to the processing of text information; in other examples, the language model 1002 operates on any of: audio information, image information, video information, sensor information, and so on, or any combination thereof.

Next, an embedding component (not shown) maps the sequence of tokens into respective token embeddings. For example, the embedding component produces one-hot vectors that describe the tokens, and then maps the one-hot vectors into the token embeddings using a machine-trained linear transformation. Note that an exception to the above explanation applies to the guidance vectors (e.g., the instances of guidance information). The guidance vectors are already in the embedding space of the draft language model 104, so guidance vectors, as received, can be added to the other embeddings (which are associated with text-based tokens).

The embedding component then adds position information (and, in some cases, segment information) to the respective token embeddings to produce position-supplemented embedding vectors 1006. The position information added to each token embedding describes the embedding vector's position in the sequence of token embeddings.

The first transformer component 1004 operates on the position-supplemented embedding vectors 1006. In some implementations, the first transformer component 1004 includes, in order, an attention component 1008, a first add-and-normalize component 1010, a feed-forward neural network (FFN) component 1012, and a second add-and-normalize component 1014.

The attention component 1008 determines how much emphasis should be placed on parts of input information when interpreting other parts of the input information. Consider, for example, a sentence that reads: "I asked the professor a question, but he could not answer it." When interpreting the word "it," the attention component 1008 will determine how much weight or emphasis should be placed on each of the words of the sentence. The attention component 1008 will find that the word "question" is most significant.

The attention component 1008 performs attention analysis using the following equation:

$$Attention(Q, K, V) = \text{softmax}\left(\frac{QK^T}{\sqrt{d_k}}\right)V \qquad (1).$$

The attention component 1008 produces query information Q by multiplying the position-supplemented embedding vectors 1006 by a query weighting matrix $W^Q$. Similarly, the attention component 1008 produces key information K and value information V by multiplying the position-supplemented embedding vectors 1006 by a key weighting matrix $W^K$ and a value weighting matrix $W^V$, respectively. To execute Equation (1), the attention component 1008 takes the dot product of Q with the transpose of K, and then divides the dot product by a scaling factor $\sqrt{d}$, to produce a scaled result. The symbol d represents the dimensionality of Q and K. The attention component 1008 takes the softmax (normalized exponential function) of the scaled result, and then multiplies the result of the softmax operation by V, to produce attention output information. In some cases, the attention component 1008 is said to perform masked attention insofar as the attention component 1008 masks output token information that, at any given time, has not yet been determined. Background information regarding the general concept of attention is provided in Vaswani, et al., "Attention Is All You Need," in 31st Conference on Neural Information Processing Systems (NIPS 2017), 2017, 11 pages.

Note that Fig. 10 shows that the attention component 1008 is composed of plural attention heads, including a representative attention head 1016. Each attention head performs the computations specified by Equation (1), but with respect to a particular representational subspace that is different than the subspaces of the other attention heads. To accomplish this operation, the attention heads perform the computations described above using different respective sets of query, key, and value weight matrices. Although not shown, the attention component 1008 concatenates the output results of the attention component's separate attention heads, and then multiplies the results of this concatenation by another weight matrix $W^O$.

A KV cache (not shown) stores the key information K and value information V computed by the attention component 1008, as described above. In a subsequent pass, the attention component 1008 consults this KV information for tokens that have already been processed. This enables the attention component 1008 to forgo the task of recomputing this KV information.

The add-and-normalize component 1010 includes a residual connection that combines (e.g., sums) input information fed to the attention component 1008 with the output information generated by the attention component 1008. The add-and-normalize component 1010 then normalizes the output information generated by the residual connection, e.g., by layer-normalizing values in the output information based on the mean and standard deviation of those values, or by performing root-mean-squared normalization. The other add-and-normalize component 1014 performs the same functions as the first-mentioned add-and-normalize component 1010. The FFN component 1012 transforms input information to output information using a feed-forward neural network having any number of layers.

The first transformer component 1004 produces output information 1018. A series of other transformer components (1020, ..., 1022) perform the same functions as the first transformer component 1004, each operating on output information produced by its immediately preceding transformer component. Each transformer component uses its own level-specific set of machine-trained weights. The final transformer component 1022 in the language model 1002 produces final output information 1024.

A post-processing component 1026 performs post-processing operations on the final output information 1024. For the case of the target language model 106, the post-processing component 1026 performs the additional functions of the LM post-processing component 308 and the guidance-generating components 310, described above with reference to Fig. 3. For the case of the draft language model 104, the post-processing component 1026 performs the additional functions of generating the candidate sequences (in the first pass) and the draft tokens (in the second pass).

The above-described implementation of the language model 1002 relies on a decoder-only architecture. Other implementations of the language model 1002 use an encoder-decoder transformer-based architecture. Here, a transformer-based decoder receives encoder output information produced by a transformer-based encoder, together with decoder input information. The encoder output information specifically includes KV information that serves an input to the attention components of the decoder (except the first transformer component).

Other implementations of the language model 1002 use other kinds of machine-trained models besides, or in addition to, the particular transformer-based architecture shown in Fig. 10. The other machine-trained models include any of convolutional neural networks (CNNs), recurrent neural networks (RNNs), fully-connected feed-forward neural networks (FFNS), stable diffusion models, etc., or any combination thereof.

In some implementations, at the outset of the fine-tuning performed by the training system 902 of Fig. 9, the transformer components (1004, 1020, ..., 1022) are implemented by a pre-trained model. One publicly available pre-trained language model is described in Touvron, et al., "LLaMA: Open and Efficient Foundation Language Models," arXiv, arXiv:2302.13971v1 [cs.CL], February 27, 2023, 27 pages. Another example of a publicly available pre-trained model language model is the BLOOM model described in Scao, et al., "BLOOM: A 176B-Parameter Open-Access Multilingual Language Model," arXiv, arXiv:2211.05100v2 [cs.CL], December 11, 2022, 62 pages.

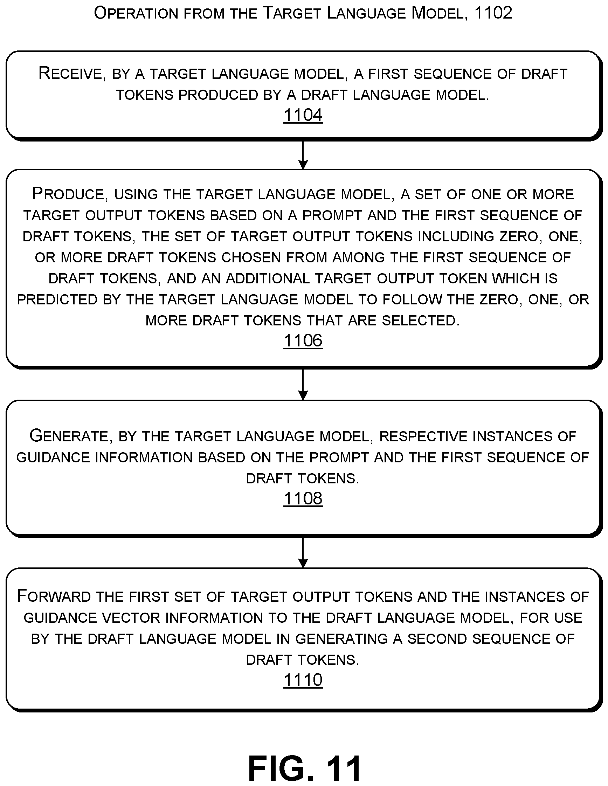

Figs. 11-13 show three processes that represent an overview of the operation of the token-generating system 102 of Fig. 3. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 6 and 7.

More specifically, Fig. 11 shows a process 1102 for accelerating generation of output tokens using a target language model (e.g., the target language model 106), which operates in cooperation with a draft language model (e.g., the draft language model 104). In block 1104, the target language model 106 receives a first sequence of draft tokens produced by the draft language model. In block 1106, the target language model produces a set of one or more target output tokens based on a prompt and the first sequence of draft tokens. The set of target output tokens includes zero, one, or more draft tokens chosen from among the first sequence of draft tokens, and an additional target output token which is predicted by the target language model to follow the zero, one, or more draft tokens that are selected. In block 1108, the target language model generates respective instances of guidance information based on the prompt and the first sequence of draft tokens. In block 110, the target language model forwards the first set of target output tokens and the instances of guidance information to the draft language model, for use by the draft language model in generating a second sequence of draft tokens.

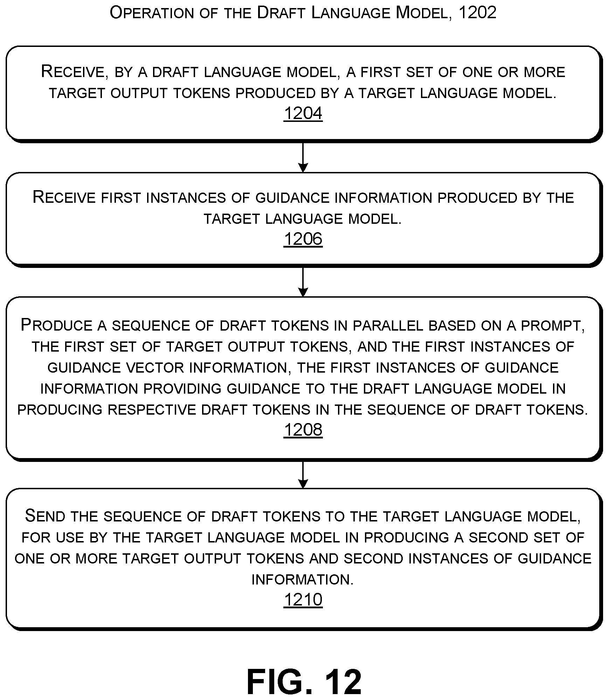

Fig. 12 shows a process 1202 that describes how a draft language model (e.g., the draft language model 104) accelerates generation of output tokens using a target language model (e.g., the target language model 106). In block 1204, the draft language model receives a first set of one or more target output tokens produced by the target language model. In block 1206, the draft language model receives first instances of guidance information produced by the target language model. In block 1208, the draft language model produces a sequence of draft tokens in parallel based on a prompt, the first set of target output tokens, and the first instances of guidance information. In this operation, the first instances of guidance information provide guidance to the draft language model in producing respective draft tokens in the sequence of draft tokens. In block 1210, the draft language model sends the sequence of draft tokens to the target language model, for use by the target language model in producing a second set of one or more target output tokens and second instances of guidance information.

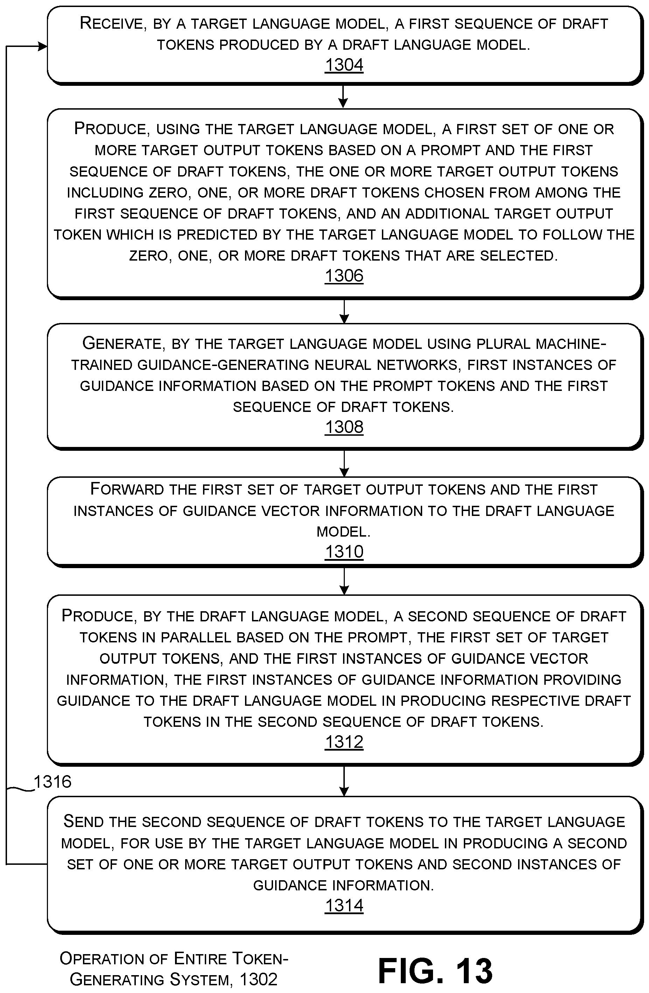

Fig. 13 shows a process 1302 performed by the token-generating system as a whole. In block 1304, a target language (e.g., the target language model 106) model receives a first sequence of draft tokens produced by a draft language model (e.g., the draft language model 104). In block 1306, the target language model produces a first set of one or more target output tokens based on a prompt and the first sequence of draft tokens. The one or more target output tokens include zero, one, or more draft tokens chosen from among the first sequence of draft tokens, and an additional target output token which is predicted by the target language model to follow the zero, one, or more draft tokens that are selected. In block 1308, the target language model generates, using plural machine-trained guidance-generating neural networks, first instances of guidance information based on the prompt tokens and the first sequence of draft tokens. In block 1310, the target language model forwards the first set of target output tokens and the first instances of guidance information to the draft language model. In block 1312, the draft language model produces a second sequence of draft tokens in parallel based on the prompt, the first set of target output tokens, and the first instances of guidance information. The first instances of guidance information provide guidance to the draft language model in producing respective draft tokens in the second sequence of draft tokens. In block 1314, the draft language model sends the second sequence of draft tokens to the target language model, for use by the target language model in producing a second set of one or more target output tokens and second instances of guidance information. The loop 1316 indicates that the above-described operations are repeated one or more times until a stop token is generated.

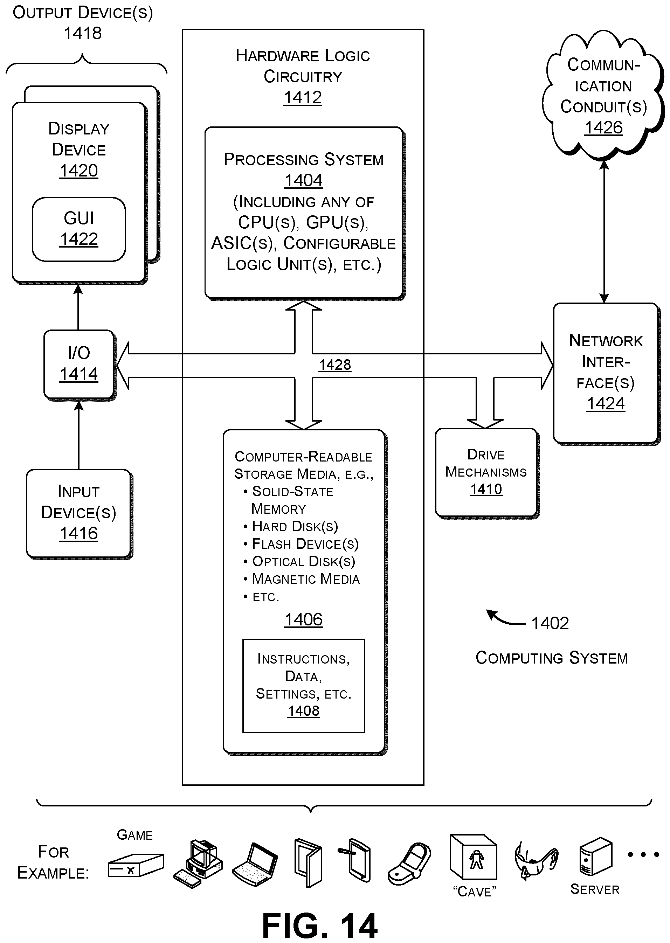

Fig. 14 shows a computing system 1402 that, in some implementations, is used to implement any aspect of the mechanisms set forth in the above-described figures. For instance, in some implementations, the type of computing system 1402 shown in Fig. 14 is used to implement any local computing device shown in Figs. 6 and 7, and/or any server shown in Fig. 7. In all cases, the computing system 1402 represents a physical and tangible processing mechanism.

The computing system 1402 includes a processing system 1404 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1402 also includes computer-readable storage media 1406, corresponding to one or more computer-readable media hardware units. The computer-readable storage media 1406 retains any kind of information 1408, such as machine-readable instructions, settings, model weights, and/or other data. In some implementations, the computer-readable storage media 1406 includes one or more solid-state devices, one or more hard disks, one or more optical disks, etc. Any instance of the computer-readable storage media 1406 uses any technology for storing and retrieving information. Further, any instance of the computer-readable storage media 1406 represents a fixed or removable unit of the computing system 1402. Further, any instance of the computer-readable storage media 1406 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1402 utilizes any instance of the computer-readable storage media 1406 in different ways. For example, in some implementations, any instance of the computer-readable storage media 1406 represents a hardware memory unit (such as random access memory (RAM)) for storing information during execution of a program by the computing system 1402, and/or a hardware storage unit (such as a hard disk) for retaining/archiving information on a more permanent basis. In the latter case, the computing system 1402 also includes one or more drive mechanisms 1410 (such as a hard drive mechanism) for storing and retrieving information from an instance of the computer-readable storage media 1406.

In some implementations, the computing system 1402 performs any of the functions described above when the processing system 1404 executes computer-readable instructions stored in any instance of the computer-readable storage media 1406. For instance, in some implementations, the computing system 1402 carries out computer-readable instructions to perform each block of the processes described with reference to Figs. 11-13. Fig. 14 generally indicates that hardware logic circuitry 1412 includes any combination of the processing system 1404 and the computer-readable storage media 1406.

In addition, or alternatively, the processing system 1404 includes one or more other configurable logic units that perform operations using a collection of logic gates. For instance, in some implementations, the processing system 1404 includes a fixed configuration of hardware logic gates, e.g., that are created and set at the time of manufacture, and thereafter unalterable. In addition, or alternatively, the processing system 1404 includes a collection of programmable hardware logic gates that are set to perform different application-specific tasks. The latter category of devices includes programmable array logic devices (PALs), generic array logic devices (GALs), complex programmable logic devices (CPLDs), field-programmable gate arrays (FPGAs), etc. In these implementations, the processing system 1404 effectively incorporates a storage device that stores computer-readable instructions, insofar as the configurable logic units are configured to execute the instructions and therefore embody or store these instructions.

In some cases (e.g., in the case in which the computing system 1402 represents a user computing device), the computing system 1402 also includes an input/output interface 1414 for receiving various inputs (via input devices 1416), and for providing various outputs (via output devices 1418). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1420 and an associated graphical user interface presentation (GUI) 1422. The display device 1420 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1402 also includes one or more network interfaces 1424 for exchanging data with other devices via one or more communication conduits 1426. One or more communication buses 1428 communicatively couple the above-described units together.

The communication conduit(s) 1426 is implemented in any manner, e.g., by a local area computer network, a wide area computer network (e.g., the Internet), point-to-point connections, or any combination thereof. The communication conduit(s) 1426 include any combination of hardwired links, wireless links, routers, gateway functionality, name servers, etc., governed by any protocol or combination of protocols.

Fig. 14 shows the computing system 1402 as being composed of a discrete collection of separate units. In some cases, the collection of units corresponds to discrete hardware units provided in a computing device chassis having any form factor. Fig. 14 shows illustrative form factors in its bottom portion. In other cases, the computing system 1402 includes a hardware logic unit that integrates the functions of two or more of the units shown in Fig. 14. For instance, in some implementations, the computing system 1402 includes a system on a chip (SoC or SOC), corresponding to an integrated circuit that combines the functions of two or more of the units shown in Fig. 14.

The following summary provides a set of illustrative examples of the technology set forth herein.

(A1) According to one aspect, a method (e.g., the process 1202) is described for using a draft language model (e.g., the draft language model 104) to accelerate generation of output tokens using a target language model (e.g., the target language model 106). The method includes: receiving (e.g., in block 1204) a first set of one or more target output tokens produced by the target language model; receiving (e.g., in block 1206) first instances of guidance information produced by the target language model; producing (e.g., in block 1208) a sequence of draft tokens in parallel based on a prompt, the first set of target output tokens, and the first instances of guidance information, the first instances of guidance information providing guidance to the draft language model in producing respective draft tokens in the sequence of draft tokens; and sending (e.g., in block 1210) the sequence of draft tokens to the target language model, for use by the target language model in producing a second set of one or more target output tokens and second instances of guidance information.

(A2) According to some implementations of the method of A1, the draft language model uses fewer parameters than the target language model, and the draft language model consumes less memory and processing resources compared to the target language model.

(A3) According to some implementations of the method of A1 or A2, the producing includes: producing a first-occurring draft token in the sequence of draft tokens based on a last target output token in the first set of target output tokens; and producing remaining draft tokens in the sequence of draft tokens that follow the first-occurring draft token based on respective instances of the first instances of guidance information.

(A4) According to some implementations of any of the methods of A1-A3, the producing is performed by the draft language model by: in a first pass, producing a set of candidate sequences of draft tokens based on the prompt, the first set of target output tokens, and the first instances of guidance information; and in a second pass, selecting a particular candidate sequence from the set of candidate sequences as the sequence of draft tokens to be sent to the target language model.

(A5) According to some implementations of the method of A4, the producing a set of candidate sequences includes: identifying a plurality of candidate tokens, the plurality of tokens including, for each position in the sequence of draft tokens, two or more candidate tokens; and identifying the set of candidate sequences of draft tokens by forming different combinations of the plurality of candidate tokens.

(A6) According to some implementations of the method of A4 or A5, the plurality of candidate sequences defines different respective paths through a hierarchical tree of candidate tokens, and the second pass includes generating a second-pass prompt that expresses the hierarchical tree in a non-nested form.

(A7) According to some implementations of the method of A6, the selecting a particular candidate sequence includes generating attention scores for valid parings of candidate tokens in the second-pass prompt, a valid pairing being a pairing that is found in one of the respective paths through the hierarchical path.

(A8) According to some implementations of any of the methods of A1-A7, the draft language model is provided by a first computing system, and the target language model is provided by a second computing system that is different than the first computing system.

(A9) According to some implementations of any of the methods of A1-A7, the draft language model and the target language model are implemented by a same computing system.

(B1) According to another illustrative aspect, another method (e.g., the process 1102) is described for accelerating generation of output tokens using a target language model (e.g., the target language model 105), which operates in cooperation with a draft language model (e.g., the draft language model 104). The method includes: receiving (e.g., in block 1104), by the target language model, a first sequence of draft tokens produced by the draft language model; producing (e.g., in block 1106), using the target language model, a set of one or more target output tokens based on a prompt and the first sequence of draft tokens, the set of target output tokens including zero, one, or more draft tokens chosen from among the first sequence of draft tokens, and an additional target output token which is predicted by the target language model to follow the zero, one, or more draft tokens that are selected; generating (e.g., in block 1108), by the target language model, respective instances of guidance information based on the prompt and the first sequence of draft tokens; and forwarding (e.g., in block 1110) the first set of target output tokens and the instances of guidance information to the draft language model, for use by the draft language model in generating a second sequence of draft tokens.

(B2) According to some implementations of the method of B1, the target language model uses more parameters than the draft language model, and the target language model consumes more memory and processing resources compared to the draft language model.

(B3) According to some implementations of the methods of B1 or B2, the producing a set of target output tokens and the generating the plural instances of guidance information are performed in a single forward pass.

(B4). According to some implementations of any of the methods of B1-B3, the operations further include using a first set of layers of the target language model to produce hidden state information based on the prompt and the first sequence of draft tokens. The producing a set of target output tokens and the generating instances of guidance information are performed by transforming the hidden state information.

(B5) According to some implementations of the method of B4, the hidden state information that is used to generate the instances of guidance information describes a last token processed by the first set of layers that has been validated as correct.

(B6) According to some implementations of the methods of B4 or B5, a part of the target language model that produces the instances of guidance information is trained while keeping parameters of the first set of layers of the target language model fixed.

(B7) According to some implementations of any of the methods of B 1-B6, the target language model uses respective neural networks to generate the instances of guidance information.

(C1) According to another illustrative aspect, another method (e.g., the process 1302) is described for providing cooperative interaction between a target language model (e.g., the target language model 106) and a draft language model (e.g., the draft language model 104). The method includes: receiving (e.g., in block 1304), by the target language model, a first sequence of draft tokens produced by a draft language model; producing (e.g., in block 1306), using the target language model, a first set of one or more target output tokens based on a prompt and the first sequence of draft tokens, the one or more target output tokens including zero, one, or more draft tokens chosen from among the first sequence of draft tokens, and an additional target output token which is predicted by the target language model to follow the zero, one, or more draft tokens that are selected; generating (e.g., in 1308), by the target language model using plural machine-trained guidance-generating neural networks, first instances of guidance information based on the prompt tokens and the first sequence of draft tokens; forwarding (e.g., in block 1310) the first set of target output tokens and the first instances of guidance information to the draft language model; producing (e.g., in block 1312), by the draft language model, a second sequence of draft tokens in parallel based on the prompt, the first set of target output tokens, and the first instances of guidance information, the first instances of guidance information providing guidance to the draft language model in producing respective draft tokens in the second sequence of draft tokens; and sending (e.g., in block 13014) the second sequence of draft tokens to the target language model, for use by the target language model in producing a second set of one or more target output tokens and second instances of guidance information.

(C2) According to some implementations of the method of C1, the target language model uses more parameters than the draft language model, and the target language model consumes more memory and processing resources compared to the draft language model.

(C3) According to some implementations of the methods of C1 or C2, the operations further include training the plural machine-trained guidance-generating neural networks based on a loss that measures, for a particular training example, a difference between: a model-generating response produced by the draft language model as guided by instances of guidance information produced by the target language model; and a ground-truth response auto-regressively produced by the target language model .

In yet another aspect, some implementations of the technology described herein include a computing system (e.g., the computing system 1402) that includes a processing system (e.g., the processing system 1404) having a processor. The computing system also includes a storage device (e.g., the computer-readable storage media 1406) for storing computer-readable instructions (e.g., the information 1408). The processing system executes the computer-readable instructions to perform any of the methods described herein (e.g., any individual method of A1-A9, B1-B7, or C1-C3).

In yet another aspect, some implementations of the technology described herein include a computer-readable storage medium (e.g., the computer-readable storage media 1406) for storing computer-readable instructions (e.g., the information 1408). A processing system (e.g., the processing system 1404) executes the computer-readable instructions to perform any of the operations described herein (e.g., the operations in any individual method of the methods of A1-A9, B1-B7, or C1-C3).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any mention of a single entity is not intended to preclude the use of plural such entities; similarly, a description of plural entities in the specification is not intended to preclude the use of a single entity. As such, a statement that an apparatus or method has a feature X does not preclude the possibility that it has additional features. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1412 of Fig. 14. The term "logic" likewise encompasses various physical and tangible mechanisms for performing a task. For instance, each processing-related operation illustrated in the flowcharts of Figs. 11-13 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method (1202) for using a draft language model (104) to accelerate generation of output tokens using a target language model (106), comprising:

   receiving (1204) a first set of one or more target output tokens produced by the target language model (106);
   receiving (1206) first instances of guidance information produced by the target language model (106);
   producing (1208) a sequence of draft tokens in parallel based on a prompt, the first set of target output tokens, and the first instances of guidance information,
   the first instances of guidance information providing guidance to the draft language model (104) in producing respective draft tokens in the sequence of draft tokens; and
   sending (1210) the sequence of draft tokens to the target language model (106), for use by the target language model (106) in producing a second set of one or more target output tokens and second instances of guidance information.

2. The method of claim 1, wherein the draft language model uses fewer parameters than the target language model, and the draft language model consumes less memory and processing resources compared to the target language model.

3. The method of claim 1, wherein the producing comprises:

   producing a first-occurring draft token in the sequence of draft tokens based on a last target output token in the first set of target output tokens; and
   producing remaining draft tokens in the sequence of draft tokens that follow the first-occurring draft token based on respective instances of the first instances of guidance information.

4. The method of claim 1, wherein the producing is performed by the draft language model by:

   in a first pass, producing a set of candidate sequences of draft tokens based on the prompt, the first set of target output tokens, and the first instances of guidance information; and
   in a second pass, selecting a particular candidate sequence from the set of candidate sequences as the sequence of draft tokens to be sent to the target language model.

5. The method of claim 4, wherein the producing a set of candidate sequences comprises:

   identifying a plurality of candidate tokens, the plurality of tokens including, for each position in the sequence of draft tokens, two or more candidate tokens; and
   identifying the set of candidate sequences of draft tokens by forming different combinations of the plurality of candidate tokens.

6. The method of claim 4, wherein the plurality of candidate sequences defines different respective paths through a hierarchical tree of candidate tokens, and wherein the second pass comprises generating a second-pass prompt that expresses the hierarchical tree in a non-nested form.

7. The method of claim 6, wherein the selecting a particular candidate sequence includes generating attention scores for valid parings of candidate tokens in the second-pass prompt, a valid pairing being a pairing that is found in one of the respective paths through the hierarchical path.

8. The method of claim 1, wherein the draft language model is provided by a first computing system, and wherein the target language model is provided by a second computing system that is different than the first computing system.

9. The method of claim 1, wherein the draft language model and the target language model are implemented by a same computing system.

10. A processing system having a processor and a storage device that is configured to perform the computer-implemented method according to any of claims 1-9.

11. A computer-readable storage medium for storing computer-readable instructions that, when executed by a processing system, perform the computer-implemented method according to any of claims 1-9.

12. A system (102) for accelerating generation of output tokens using a target language model (106), which operates in cooperation with a draft language model (104), comprising:

an instruction data store (1406) for storing computer-readable instructions (1408); and
a processing system (1404) for executing the computer-readable instructions (1408) in the data store (1406), to perform operations including:

receiving (1104), by the target language model (106), a first sequence of draft tokens produced by the draft language model (104);
producing (1106), using the target language model (106), a set of one or more target output tokens based on a prompt and the first sequence of draft tokens, the set of target output tokens including zero, one, or more draft tokens chosen from among the first sequence of draft tokens, and an additional target output token which is predicted by the target language model (106) to follow the zero, one, or more draft tokens that are selected;
generating (1108), by the target language model (106), respective instances of guidance information based on the prompt and the first sequence of draft tokens; and
forwarding (1110) the first set of target output tokens and the instances of guidance information to the draft language model (104), for use by the draft language model (104) in generating a second sequence of draft tokens.

13. The system of claim 12, wherein the producing a set of target output tokens and the generating the plural instances of guidance information are performed in a single forward pass.

14. The system of claim 12,

wherein the operations further comprise using a first set of layers of the target language model to produce hidden state information based on the prompt and the first sequence of draft tokens, and
wherein the producing a set of target output tokens and the generating instances of guidance information are performed by transforming the hidden state information.

15. The system of claim 14, wherein the hidden state information that is used to generate the instances of guidance information describes a last token processed by the first set of layers that has been validated as correct.

## STAGE A

P(1) 108

&

DRAFT TOKENS(1) 110

D1  D2  D3  D4

TARGET MODEL 106

TARGET OUTPUT(2) 112

D1  D2  ~~D3~~  ~~D4~~  +  $T_{NEW}$

GUIDANCE INFORMATION(2) 114

G1'  G2'  G3'

P(2)

COOPERATIVE TOKEN-GENERATING SYSTEM 102

P(1) 108

D1  D2  +  $T_{NEW}$

DRAFT MODEL 104

D1'  D2'  D3'  D4'

DRAFT TOKENS(2) 116

## STAGE B

P(2) 118

&

D1'  D2'  D3'  D4'

DRAFT TOKENS(2) 116

TARGET MODEL 106

TARGET OUTPUT(3) 120

D1'  D2'  D3'  ~~D4'~~  +  $T_{NEW}$

GUIDANCE INFORMATION(3) 122

G1"  G2"  G3"

**FIG. 1**

(P1)

204 { DRAFT TOKENS(1)

TARGET OUTPUT(2)

The dog wagged

its tail angrily when

its tail ~~angrily when~~ happily

ACCEPTED REJECTED NEW
206       208      210

⇓

(P2)

212 { DRAFT TOKENS(2)

The dog wagged its tail happily

$T_{NEW}$

when his owner barked

↑   ↑   ↑
G1'  G2'  G3'

⇓

214 { TARGET OUTPUT(3)

when his owner ~~barked~~ returned

ACCEPTED   REJECTED   NEW

⇓

(P3)

216 { DRAFT TOKENS(3)

The dog wagged its tail happily when his owner returned

from school that day

⇓

218 { TARGET OUTPUT(4)

from school that day   with

ACCEPTED           NEW

⇓

(P4)

220 { DRAFT TOKENS(4)

The dog wagged its tail happily when his owner returned from school that day with

the teacher's pet and

⇓

222 { TARGET OUTPUT(5)

~~The teacher's pet and~~   a

REJECTED   NEW

⋮

# FIG. 2

← 202

COOPERATIVE TOKEN-
GENERATING SYSTEM

102 →

P(1)
108

&

| D1 | D2 | D3 | D4 |

DRAFT
TOKENS(1)
110

KV CACHE
306

BASE
TARGET
LANGUAGE
MODEL
302

LLM POST-
PROCESSING
COMPONENT 308

VALIDATION
COMP. 312

PREDICT-NEXT
COMP. 314

TARGET OUTPUT
112

| D1 | D2 | ~~D3~~ | ~~D4~~ | T_NEW |

D2 IS LAST VALIDATED

HEAD 1 316 → G1'

HEAD 2 318 → G2'

HEAD 3 320 → G3'

114

GUIDANCE-
GENERATING
COMPONENTS 310

HIDDEN STATE
INFORMATION OF D2

HIDDEN STATE
INFORMATION 304

| D1 | D2 | T_NEW |

TARGET LANGUAGE MODEL 106

P(1) 108

&

112

| D1 |
| D2 |
| T_NEW |

&

114

| G1' |
| G2' |
| G3' |

KV CACHE 324

DRAFT
LANGUAGE
MODEL
104

CANDIDATE
SEQUENCES
322

(NEW SET OF DRAFT TOKENS
TO TARGET MODEL)

DRAFT
TOKENS(2) 116

| D1' | D2' | D3' | D4' |

# FIG. 3

402 {
1. All
2. good
3. things ——————————— BASED ON LAST TOKEN

4. will | must ←—————————
5. come | must ——— ←——— TOP 2 TOKENS BASED ON G1
6. to | went ←——— TOP 2 TOKENS BASED ON G2
7. end | an ←——— TOP 2 TOKENS BASED ON G3

— 404

things

will — must

come — must — come — must

to — went — to — went — to — went — to — went

408

⇓ ⋮

All good things will come to ...
All good things will come went ...
All good things will must to ...
All good things will must went ...
**All good things must come to ...**
Al good things must come went ...
All good things must must to ...
All good things must must went ...

} 406

⋮

⇓ — 410

PROMPT + FLATTED TREE OF CANDIDATE SEQUENCE
All good things will must come must come must to went to went to went to went...

⇓

| All good things | must | come | to | an | |
|---|---|---|---|---|---|
| | D1' | D2' | D3' | D4' | 412 |

# FIG. 4

**FIG. 5**

**FIG. 6**

**FIG. 7**

**FIG. 8**

TRAINING SYSTEM

TARGET LANGUAGE MODEL 106'

902 ⟶

1ST INPUT TOKENS 914

BASE MODEL 302

PARAM. 904 (FIXED)

LM POST-PROCESSING COMPONENT 310 (FIXED)

GUIDANCE-GENERATING COMPONENTS 312

PARAMETERS 910

TARGET OUTPUT TOKENS 916

GUIDANCE 918

1ST TRAINING TECHNIQUE 904

$\Delta w$

&

DRAFT MODEL 104'

1ST LOSS-GENERATING COMPONENT 922

PARAMETER UPDATING COMPONENT 926

1ST GT RESULTS (GENERATED BY TARGET MODEL) 924

920

2ND TRAINING TECHNIQUE 906 (STANDALONE LM FINE-TUNING)

3RD TRAINING TECHNIQUE 908 (KNOWLEDGE DISTILLATION)

2ND INPUT TOKENS 2 928

2ND GT RESULTS (MANUALLY-GENERATED) 934

3RD INPUT TOKENS 938

TARGET MODEL (FIXED) 106

DRAFT MODEL 104'

PARAM. 912

2ND LOSS-GENERATING COMPONENT 932

930

DRAFT MODEL' 104

PARAM. 912

3RD GT RESULTS 944

3RD LOSS-GENERATING COMPONENT 942

940

$\Delta w$

PARAMETER UPDATING COMPONENT 936

$\Delta w$

PARAMETER UPDATING COMPONENT 946

# FIG. 9

MACHINE-TRAINED
MODEL

1002 —

POST PROCESSING COMPONENT(S)
1026

OUTPUT EMBEDDING INFORMATION 1024

NTH TRANSFORMER COMPONENT 1022

⋮

SECOND TRANSFORMER COMPONENT 1020

1018

ADD & NORMALIZE COMPONENT 2
1014

FFN COMPONENT
1012

ADD & NORMALIZE COMPONENT 1
1010

ATTENTION HEAD 1
1016

ATTENTION
COMPONENT
1008

FIRST TRANSFORMER
COMPONENT 1004

1006 { ··· ▯ ▯ ▯ ▯ ▯ ▯ ▯

# FIG. 10

Operation from the Target Language Model, 1102

> RECEIVE, BY A TARGET LANGUAGE MODEL, A FIRST SEQUENCE OF DRAFT TOKENS PRODUCED BY A DRAFT LANGUAGE MODEL.
> 1104

> PRODUCE, USING THE TARGET LANGUAGE MODEL, A SET OF ONE OR MORE TARGET OUTPUT TOKENS BASED ON A PROMPT AND THE FIRST SEQUENCE OF DRAFT TOKENS, THE SET OF TARGET OUTPUT TOKENS INCLUDING ZERO, ONE, OR MORE DRAFT TOKENS CHOSEN FROM AMONG THE FIRST SEQUENCE OF DRAFT TOKENS, AND AN ADDITIONAL TARGET OUTPUT TOKEN WHICH IS PREDICTED BY THE TARGET LANGUAGE MODEL TO FOLLOW THE ZERO, ONE, OR MORE DRAFT TOKENS THAT ARE SELECTED.
> 1106

> GENERATE, BY THE TARGET LANGUAGE MODEL, RESPECTIVE INSTANCES OF GUIDANCE INFORMATION BASED ON THE PROMPT AND THE FIRST SEQUENCE OF DRAFT TOKENS.
> 1108

> FORWARD THE FIRST SET OF TARGET OUTPUT TOKENS AND THE INSTANCES OF GUIDANCE VECTOR INFORMATION TO THE DRAFT LANGUAGE MODEL, FOR USE BY THE DRAFT LANGUAGE MODEL IN GENERATING A SECOND SEQUENCE OF DRAFT TOKENS.
> 1110

# FIG. 11

OPERATION OF THE DRAFT LANGUAGE MODEL, 1202

RECEIVE, BY A DRAFT LANGUAGE MODEL, A FIRST SET OF ONE OR MORE TARGET OUTPUT TOKENS PRODUCED BY A TARGET LANGUAGE MODEL.
1204

RECEIVE FIRST INSTANCES OF GUIDANCE INFORMATION PRODUCED BY THE TARGET LANGUAGE MODEL.
1206

PRODUCE A SEQUENCE OF DRAFT TOKENS IN PARALLEL BASED ON A PROMPT, THE FIRST SET OF TARGET OUTPUT TOKENS, AND THE FIRST INSTANCES OF GUIDANCE VECTOR INFORMATION, THE FIRST INSTANCES OF GUIDANCE INFORMATION PROVIDING GUIDANCE TO THE DRAFT LANGUAGE MODEL IN PRODUCING RESPECTIVE DRAFT TOKENS IN THE SEQUENCE OF DRAFT TOKENS.
1208

SEND THE SEQUENCE OF DRAFT TOKENS TO THE TARGET LANGUAGE MODEL, FOR USE BY THE TARGET LANGUAGE MODEL IN PRODUCING A SECOND SET OF ONE OR MORE TARGET OUTPUT TOKENS AND SECOND INSTANCES OF GUIDANCE INFORMATION.
1210

# FIG. 12

RECEIVE, BY A TARGET LANGUAGE MODEL, A FIRST SEQUENCE OF DRAFT TOKENS PRODUCED BY A DRAFT LANGUAGE MODEL.
1304

PRODUCE, USING THE TARGET LANGUAGE MODEL, A FIRST SET OF ONE OR MORE TARGET OUTPUT TOKENS BASED ON A PROMPT AND THE FIRST SEQUENCE OF DRAFT TOKENS, THE ONE OR MORE TARGET OUTPUT TOKENS INCLUDING ZERO, ONE, OR MORE DRAFT TOKENS CHOSEN FROM AMONG THE FIRST SEQUENCE OF DRAFT TOKENS, AND AN ADDITIONAL TARGET OUTPUT TOKEN WHICH IS PREDICTED BY THE TARGET LANGUAGE MODEL TO FOLLOW THE ZERO, ONE, OR MORE DRAFT TOKENS THAT ARE SELECTED.
1306

GENERATE, BY THE TARGET LANGUAGE MODEL USING PLURAL MACHINE-TRAINED GUIDANCE-GENERATING NEURAL NETWORKS, FIRST INSTANCES OF GUIDANCE INFORMATION BASED ON THE PROMPT TOKENS AND THE FIRST SEQUENCE OF DRAFT TOKENS.
1308

FORWARD THE FIRST SET OF TARGET OUTPUT TOKENS AND THE FIRST INSTANCES OF GUIDANCE VECTOR INFORMATION TO THE DRAFT LANGUAGE MODEL.
1310

PRODUCE, BY THE DRAFT LANGUAGE MODEL, A SECOND SEQUENCE OF DRAFT TOKENS IN PARALLEL BASED ON THE PROMPT, THE FIRST SET OF TARGET OUTPUT TOKENS, AND THE FIRST INSTANCES OF GUIDANCE VECTOR INFORMATION, THE FIRST INSTANCES OF GUIDANCE INFORMATION PROVIDING GUIDANCE TO THE DRAFT LANGUAGE MODEL IN PRODUCING RESPECTIVE DRAFT TOKENS IN THE SECOND SEQUENCE OF DRAFT TOKENS.
1312

1316

SEND THE SECOND SEQUENCE OF DRAFT TOKENS TO THE TARGET LANGUAGE MODEL, FOR USE BY THE TARGET LANGUAGE MODEL IN PRODUCING A SECOND SET OF ONE OR MORE TARGET OUTPUT TOKENS AND SECOND INSTANCES OF GUIDANCE INFORMATION.
1314

OPERATION OF ENTIRE TOKEN-GENERATING SYSTEM, 1302

FIG. 13

OUTPUT DEVICE(S)
1418

DISPLAY
DEVICE
1420

GUI
1422

HARDWARE LOGIC
CIRCUITRY
1412

PROCESSING SYSTEM
1404
(INCLUDING ANY OF
CPU(S), GPU(S),
ASIC(S), CONFIGURABLE
LOGIC UNIT(S), ETC.)

COMMUN-
ICATION
CONDUIT(S)
1426

I/O
1414

1428

NETWORK
INTER-
FACE(S)
1424

INPUT
DEVICE(S)
1416

COMPUTER-READABLE
STORAGE MEDIA, E.G.,
• SOLID-STATE
  MEMORY
• HARD DISK(S)
• FLASH DEVICE(S)
• OPTICAL DISK(S)
• MAGNETIC MEDIA
• ETC.
1406

INSTRUCTIONS,
DATA,
SETTINGS, ETC.
1408

DRIVE
MECHANISMS
1410

1402

COMPUTING SYSTEM

FOR
EXAMPLE:

GAME

"CAVE"

SERVER

• • •

FIG. 14

| | Europäisches Patentamt<br>European Patent Office<br>Office européen des brevets | **EUROPEAN SEARCH REPORT** | **Application Number**<br>EP 25 16 2167 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | YANIV LEVIATHAN ET AL: "Fast Inference from Transformers via Speculative Decoding",<br>ARXIV.ORG, CORNELL UNIVERSITY LIBRARY, 201 OLIN LIBRARY CORNELL UNIVERSITY ITHACA, NY 14853,<br>18 May 2023 (2023-05-18), XP091512291,<br>* Sections 1, 2, 4, and 5 *<br>* figures 1, 5 *<br>----- | 1-15 | INV.<br>G06N3/045<br>G06F40/284 |
| A | XIAOXUAN LIU ET AL: "Online Speculative Decoding",<br>ARXIV.ORG, CORNELL UNIVERSITY LIBRARY, 201 OLIN LIBRARY CORNELL UNIVERSITY ITHACA, NY 14853,<br>11 October 2023 (2023-10-11), XP091632640,<br>* Sections 1, 3, and 4 *<br>----- | 1-15 | |
| A | Xia Heming ET AL: "Speculative Decoding: Exploiting Speculative Execution for Accelerating Seq2seq Generation",<br><br>30 October 2023 (2023-10-30), XP093247229,<br>DOI:<br>https://doi.org/10.48550/arXiv.2203.16487<br>Retrieved from the Internet:<br>URL:https://arxiv.org/pdf/2203.16487<br>* Sections 1-3 *<br>----- | 1-15 | **TECHNICAL FIELDS SEARCHED (IPC)**<br><br>G06N<br>G06F |
| A | HEMING XIA ET AL: "Speculative Decoding: Lossless Speedup of Autoregressive Translation",<br>ARXIV.ORG, CORNELL UNIVERSITY LIBRARY, 201 OLIN LIBRARY CORNELL UNIVERSITY ITHACA, NY 14853,<br>16 October 2023 (2023-10-16), XP091634938,<br>* Sections 1-4 *<br>----- | 1-15 | |

-/--

The present search report has been drawn up for all claims

| Place of search | Date of completion of the search | Examiner |
|---|---|---|
| The Hague | 2 July 2025 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 16 2167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEQUN CHEN ET AL: "Punica: Multi-Tenant LoRA Serving", ARXIV.ORG, CORNELL UNIVERSITY LIBRARY, 201 OLIN LIBRARY CORNELL UNIVERSITY ITHACA, NY 14853, 28 October 2023 (2023-10-28), XP091647661, * Sections 1, 3, and 5 * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 2 July 2025 | Mariani, Giovanni |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VASWANI et al.** Attention Is All You Need. *31st Conference on Neural Information Processing Systems (NIPS 2017)*, 2017, 11
- **TOUVRON et al.** LLaMA: Open and Efficient Foundation Language Models. *arXiv, arXiv:2302.13971v1 [cs.CL*, 27 February 2023, 27

- **SCAO et al.** BLOOM: A 176B-Parameter Open-Access Multilingual Language Model. *arXiv, arXiv:2211.05100v2 [cs.CL*, 11 December 2022, 62